# EUROPÄISCHE PATENTSCHRIFT

(11) **EP 0 610 947 B1**
(45) Veröffentlichungstag und Bekanntmachung des Hinweises auf die Patenterteilung: **06.05.1999**
(21) Anmeldenummer: 94102150.3
(22) Anmeldetag: 11.02.1994
(51) Int. Cl.: B23Q 7/14, B62D 65/00

(54) **Arbeitsstation für Lackier-Fertigungsstrassen im Fahrzeugbau**
Work station for car painting production lines
Poste de travail pour une ligne de peinture d'automobiles

(30) Priorität: 12.02.1993 DE 4304223
(43) Veröffentlichungstag der Anmeldung: 17.08.1994
(73) Patentinhaber: EISENMANN MASCHINENBAU KG (Komplementär: EISENMANN-Stiftung), D-71032 Böblingen (DE)
(72) Erfinder: Kleist, Reinhard, D-71088 Holzgerlingen (DE); Speer, Robert, D-71032 Böblingen (DE)
(74) Vertreter: Fürst, Siegfried

(56) Entgegenhaltungen:
- EP-A- 0 502 601
- DE-U- 8 603 558

## Beschreibung

Die Erfindung betrifft eine Arbeitsstation für Lackier-Fertigungsstraßen im Fahrzeugbau gemäß dem Oberbegriff des Anspruches 1.

Eine derartige Arbeitsstation ist aus der EP 502 601 A1 bekannt. Gemäß dieser Druckschrift sind die zu bearbeitenden Werkstücke an Transporteinheiten eines Förderbandes gehalten und werden einem rechteckigen Arbeitstisch zugeführt, der mit Hilfe eines Rotors um eine vertikale Hochachse rotieren kann. Jede Seite des Tisches kann dem Arbeiter oder auch einem Roboter zur Bearbeitung des Werkstückes zugeführt werden, das an speziell ausgebildeten Aufnahmen des Arbeitstisches gehalten ist.

Dabei wird der Übergang zwischen dem Förderband und der Arbeitsstation so gestaltet, daß das Werkstück einschließlich der Transporteinheit übergeben wird. Nach der Bearbeitung werden das Werkstück und die Transporteinheit wieder an das Förderband gehängt und der nächsten Arbeitsstation zugeführt.

Bedingt durch die Größe der zu bearbeitenden Werkstücke, nämlich Fahrzeug- oder Karosserieteile, ist auch die Arbeitsstation entsprechend groß ausgebildet, damit an jeder Seite des Arbeitstisches ein Werkstück aufgenommen werden kann. Der Flächenbedarf ist dadurch groß.

Der Erfindung liegt das Problem zugrunde, eine Arbeitsstation für Fertigungsstraßen im Fahrzeugbau für große Werkstücke wie Karosserien zu schaffen, die sich günstig auf den Flächenbedarf auswirkt und die Nutzung vorhandener, einfacher Transporteinheiten, Skids, erlaubt und mit geringem technisch-ökonomischen Aufwand herstellbar ist.

Dieses Problem wird erfindungsgemäß mit den Merkmalen des Anspruches 1 gelöst.

In den Unteransprüchen 2 bis 6 sind vorteilhafte Weiterbildungen, Anwendungen und Ausführungsbeispiele der Erfindung aufgezeigt.

Die Vorteile der erfindungsgemäßen Arbeitsstation für Lackier-Fertigungsstraßen sind
- vorhandene Transporteinheiten, Skids, sind mit geringstem Aufwand nachrüstbar, da nur Buchsen für eine Verriegelung angebracht werden müssen;
- die Station ist an beliebiger Stelle in der Fertigungsstraße integrierbar, auch eine nachträgliche Einfügung ist möglich;
- der Flächenbedarf ist gering und
- ebenso der Herstellungsaufwand, zudem ist sie extrem wartungsfreundlich.

Die Erfindung wird anhand von in Zeichnungen dargestellten Ausführungsbeispielen im weiteren näher erläutert.
Es zeigen in stark schematisierter Darstellung:
- Fig. 1: eine Seitenansicht einer in eine Fertigungsstraße eingefügten erfindungsgemäßen Arbeitsstation,
- Fig. 2: eine Stirnseitenansicht von Fig. 1 und
- Fig. 3 + 4: eine weitere Verwendungsmöglichkeit.

Das Ausführungsbeispiel zeigt die erfindungsgemäße Arbeitsstation, in eine Fertigungsstraße des Fahrzeugbaues integriert.
Über ein Fördersystem 1 wird ein Skid 2 mit auf diesem 2 fest angebrachter Karosse 6 durch einen nachfolgenden Skid 2 in eine Aufnahme 3c eingeschoben, gehaltert und mit mindestens einer Verriegelung 3d arretiert.
Die Aufnahme 3c ist an einem um seine Längsachse 3h drehbaren, beidseitig in einem Gestell 3a gehalterten Rotor 3b angeordnet. In diesem Ausführungsbeispiel sind am Rotor 3b vier Aufnahmen 3c vorgesehen.
Der Antrieb des Rotors 3b erfolgt durch eine Antriebseinheit 3e, die einen Motor und ein Getriebe aufweist, in Verbindung mit einer Steuereinheit 3f.
Der Rotorbereich ist von dem Antriebsbereich durch eine Verkleidung getrennt. Erfindungsgemäß ist der Antriebsbereich unterhalb des Fördersystems 1' in platzsparender Weise angeordnet.

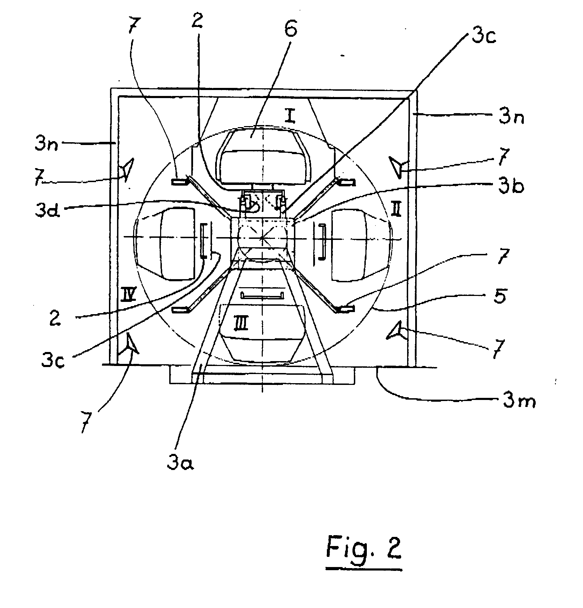

Die Fig. 2 zeigt die voll ausgelastete Arbeitsstation 3 mit einer sie umschließenden Kabine 3n, die auf den Boden 3m aufgesetzt ist.

Außerhalb des durch die äußere Kante der Karosse 6 gegebenen Umfangskreises 5 können Heiz-, Kühl-bzw. Lüftungsaggregate vorgesehen sein. Hier sind vorzugsweise an sich bekannte Luftdüsen vorgesehen, die, weil bekannt, nicht weiter dargestellt sind.

Zusätzlich zu den am Umfangskreis 5 vorgesehenen Aggregaten sind an den Stirnseiten, außer an der Station I, weitere Aggregate positionierbar.
Die Arbeitsstation 3 kann auch mehrfach in der Fertigungsstraße angeordnet werden. Dies hängt in erster Linie von den technologischen Gesamtbedingungen ab.

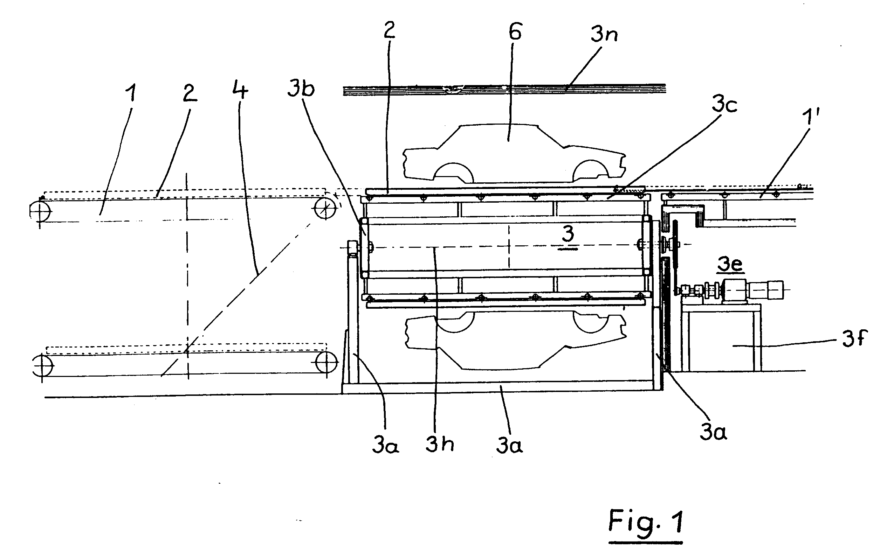

In der Fig. 1 ist mit 4 eine Hubeinheit angedeutet, die für eine eventuelle Niveauregulierung zwischen dem Fördersystem 1 und der in Station I befindlichen Aufnahme 3c sorgt.
Nach Durchlaufen der Stationen I bis IV wird der wieder in I ankommende, mit einer Karosse 6 versehene Skid 2 durch einen nachfolgenden, neu in die Station I einfahrenden weiteren Skid 2 in das Fördersystem 1' geschoben.

Zur Unterstützung und Verkürzung der Zeit in der Ein-/Auslaufphase können an den Fördersystemen 1 und 1' und/oder an der Arbeitsstation eine Pusher-und/oder eine Zugvorrichtung wirkend auf die Skids vorgesehen werden.

Die verwendeten Stell- und Antriebseinheiten, die Verriegelung und die Steuereinheit können sowohl mechanisch, elektromechanisch, pneumatisch oder hydraulisch wirkend ausgeführt sein.

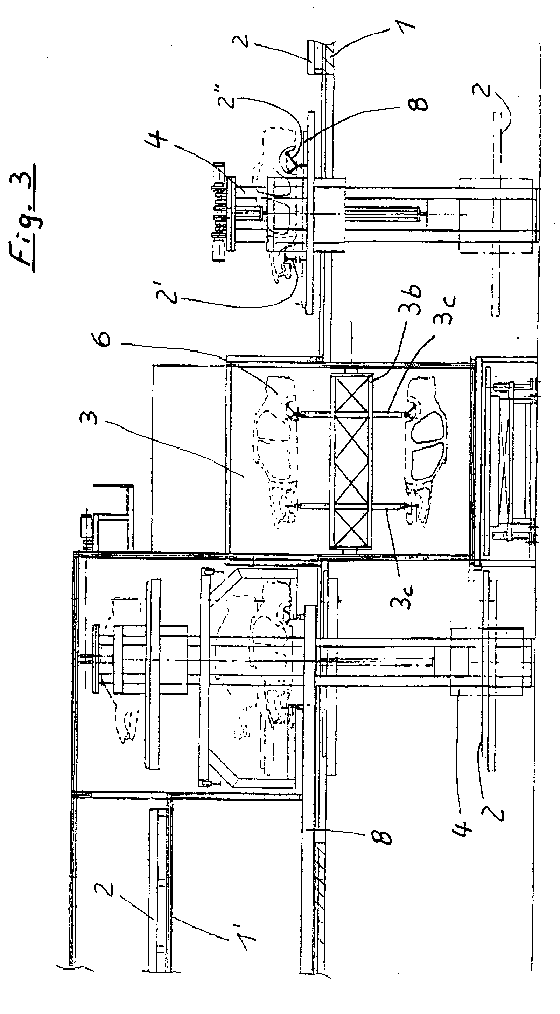

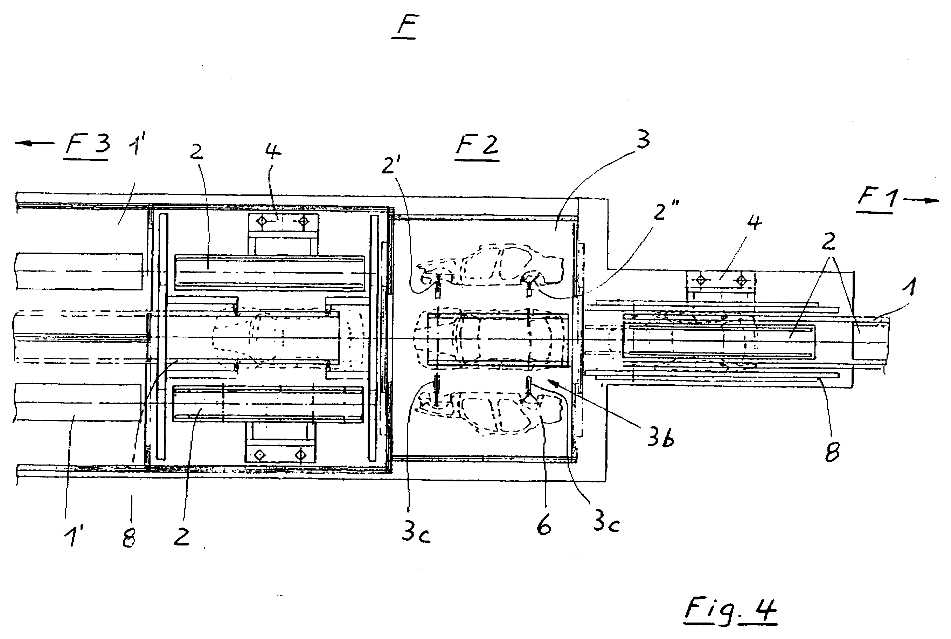

Die Fig. 3 und 4 zeigen in teilweise geschnittener Seiten- bzw. Draufsicht eine Fertigungsstraße F mit Fertigungsabschnitten F 1 bis F 3, wobei die unmittelbar vor und nach der Arbeitsstation 3 gelegenen Teilbereiche des Fördersystems 1, 1' hier konstruktiv etwas anders gestaltet sind.
Weiterhin ist in diesem Ausführungsbeispiel vorgesehen, das Werkstück 6, hier eine Karosse, mitsamt den Verbindungsstücken 2', 2'' von der Transporteinheit 2 zu trennen und mittels diesen 2', 2'' an der Aufnahme 3c des Rotors 3b zu haltern.
Die Übergabe von der Transporteinheit 2 zur Aufnahme 3c erfolgt durch einen Hubbalken 8. Die entladene Transporteinheit 2 wird unter Verwendung von Hubeinheiten 4 hier unter der Arbeitsstation 3 hindurch zu deren Ausgabeseite gefördert und für die Wiederaufnahme eines Werkstückes 6 bereitgestellt.
Ein weiterer Hubbalken 8 übernimmt das Werkstück 6 aus der Arbeitsstation 3 und setzt dieses 6 auf die bereitgestellte Transporteinheit 2 auf.

Die Orientierungs-, Führungs- und Arretierungsmittel an der Transporteinheit 2, an den Aufnahmen 3c und den Verbindungsstücken 2', 2'' sind an sich bekannte mechanische, pneumatische oder hydraulische Bauteile, auf die somit im Detail nicht eingegangen wird.

Sei Werkstücken geringer Länge und entsprechend gestalteter Arbeitsstation ist die Verwendung nur eines entsprechend lang dimensionierten Hubbalkens 8 möglich.
Darüber hinaus zeigen die Fig. 2 bis 4 im Beispiel eine Möglichkeit der Anordnung von Heiz-, Kühl- oder Lüftungsaggregaten.

Bei Ausbildung der Verbindungsstücke 2', 2'' derart, daß diese 2', 2'' mit den zur Transporteinheit 2 gerichteten Anschlußstellen unter dem Werkstück 6 innerhalb dessen Grundfläche verbleiben, ergeben sich weitere Raumersparnisse.

Ein weiteres Detail der Erfindung sieht vor, den Rotor 3b mittels Hohlwellen zu lagern, durch die in günstiger Weise Versorgungs- und Steuerleitungen ins Innere der Arbeitsstation geführt werden können.

### BEZUGSZEICHENVERZEICHNIS

- 1, 1': Fördersystem
- 2: Transporteinheit (Skid)
- 2', 2'': Verbindungsstücke
- 3: Arbeitsstation
- 3a: Gestell
- 3b: Rotor
- 3c: Aufnahme
- 3d: Verriegelung
- 3e: Antriebseinheit
- 3f: Steuereinheit
- 3h: Achse
- 3m: Boden
- 3n: Kabine
- 4: Hubeinheit
- 5: Umfangskreis
- 6: Werkstück, Karosse
- 7: Heiz-, Kühl-, Lüftungsaggregate
- 8: Hubbalken
- I, II, III, IV: Stationen
- F: Fertigungsstraße
- F1, F2, F3: Fertigungsabschnitt

## Patentansprüche

1. Arbeitsstation für Lackier-Fertigungsstraßen im Fahrzeugbau, in denen die Werkstücke (6) im wesentlichen auf mehrteiligen Transporteinheiten (2) gehaltert von einem Fertigungsabschnitt (F1, F2, F3) zu einem weiteren Fertigungsabschnitt (F1, F2, F3) und durch diese hindurch mittels eines Fördersystems (1, 1') bewegt werden, wobei die Arbeitsstation (3) einen drehbaren Rotor (3b) aufweist, der mit mindestens zwei konzentrisch zu seiner Körperlängsachse (3h) angeordneten Aufnahmen (3c) versehen ist, welche zur Halterung jeweils einer Transporteinheit (2) bzw. Teilen von dieser mit aufgesetztem Werkstück (6) ausgebildet sind,
**dadurch gekennzeichnet,**
a) daß der Rotor (3b) um seine im wesentlichen horizontal gelagerte Körperlängsachse (3a) drehbar ist,
b) daß die Arbeitsstation (3) zur Übernahme und Übergabe des Werkstückes (6) zwischen der Transporteinheit (2) und der Aufnahme (3c) der Arbeitsstation (3) in einer bestimmten Drehposition des Rotors Positioniermittel (8) aufweist.

2. Arbeitsstation nach Anspruch 1,
**dadurch gekennzeichnet,**
daß das Positioniermittel ein Hubbalken (8) ist.

3. Arbeitsstation nach Anspruch 1 oder 2,
**dadurch gekennzeichnet**,
daß mittels einzelner, abkoppelbarer Verbindungsstücke (2', 2'') der Transporteinheit (2) das jeweilige Werkstück (6) auf die Aufnahme (3c) aufgesetzt gehaltert ist.

4. Arbeitsstation nach Anspruch 3,
**dadurch gekennzeichnet,**
daß die Verbindungsstücke (2', 2'') unter dem Werkstück (6) innerhalb dessen Grundfläche angeordnet sind.

5. Arbeitsstation nach einem der Ansprüche 1 bis 4,
**dadurch gekennzeichnet,**
daß mittel- oder unmittelbar außerhalb des durch die äußere Kante der Werkstücke (6) beschriebenen Umfangskreises (5) und vorzugsweise innerhalb der Kabine (3n) Heiz-, Kühl- oder Lüftungsaggregate bzw. -einrichtungen (7) vorgesehen sind.

6. Arbeitsstation nach einem der Ansprüche 1 bis 4,
**dadurch gekennzeichnet,**
daß zumindest teilweise Heiz-, Kühl- oder Lüftungsaggregate oder - einrichtungen (7) am Rotor (3b) bzw. den Aufnahmen (3c) direkt angeordnet und auf ein oder mehrere der gehalterten Werkstücke (6) ausgerichtet sind.

## Claims

1. Work station for paint finishing lines in vehicle construction, in which the workpieces (6) held substantially on multipart transport units (2) are moved by means of a conveying system (1, 1') from one finishing section (F1, F2, F3) to a further finishing section (F1, F2, F3) and through these, wherein the work station (3) has a rotatable rotor (3b), which is provided with at least two holding fixtures (3c) arranged concentrically to its body longitudinal axis (3h) and constructed for holding a respective transport unit (2) or parts thereof together with a workpiece (6) placed thereon, characterised in that
a) the rotor (3b) is rotatable about its substantially horizontally fulcrumed body longitudinal axis (3h), and
b) the work station (3) has positioning means (8) in a defined rotational position of the rotor for taking over and transferring the workpiece (6) between the transport unit (2) and the holding fixtures (3c) of the work station (3).

2. Workstation according to claim 1, characterised in that the positioning means is a lifting beam (8).

3. Workstation according to claim 1 or 2, characterised in that the respective workpiece (6) is placed on the holding fixtures (3c) to be held by means of individual, uncouplable connecting members (2', 2'') of the transport unit (2).

4. Workstation according to claim 3, characterised in that the connecting members (2', 2'') are arranged under the workpiece (6) within the base area thereof.

5. Work station according to one of claims 1 to 4, characterised in that heating, cooling or ventilating sets or devices (7) are provided directly or indirectly outside the circumferential circle (5), which is described by the outer edge of the workpiece (5), and preferably within the booth (3n).

6. Work station according to one of claims 1 to 4, characterised in that at least in part heating, cooling or ventilating sets or devices (7) are arranged directly at the rotor (3b) or the holding fixtures (3c) and oriented to one or more of the held workpieces (6).

## Revendications

1. Poste de travail pour chaînes de production et de laquage dans le domaine de la construction automobile, dans lesquelles les pièces à travailler (6) sont déplacées, en étant essentiellement maintenues par des unités de transport en plusieurs parties (2), d'un tronçon de production (F1, F2, F3) à un autre tronçon de production (F1, F2, F3), et à travers ceux-ci au moyen d'un système de transport (1, 1'), sachant que le poste de travail (3) présente un rotor rotatif (3b) qui est muni d'au moins deux réceptacles (3c) disposés de façon concentrique par rapport à son axe longitudinal (3h), lesquels sont réalisés de façon à maintenir chaque fois une unité de transport (2) ou des parties de celle-ci sur laquelle est placée la pièce à travailler (6), caractérisé en ce que
a) le rotor (3b) tourne autour Je son axe longitudinal (3a) qui est essentiellement horizontal,
b) le poste de travail (3) présente des moyens de positionnement (8) pour recevoir et transmettre la pièce à travailler (6) entre l'unité de transport (2) et le réceptacle (3c) du poste de travail (3) tandis que le rotor se trouve dans une certaine position en rotation.

2. Poste de travail selon la revendication 1, caractérisé en ce que le moyen de positionnement est un longeron mobile (8).

3. Poste de travail selon la revendication 1 ou 2, caractérisé en ce que la pièce à travailler (6) est maintenue posée sur le réceptacle (3c) au moyen d'éléments de liaison (2', 2'') individuels de l'unité de transport (2) pouvant être désaccouplés.

4. Poste de travail selon la revendication 3, caractérisé en ce que les éléments de liaison (2' 2'') sont placés sous la pièce à travailler (6), dans sa surface de base.

5. Poste de travail selon l'une des revendications 1 à 4, caractérisé en ce que, indirectement ou directement en dehors du périmètre (5) décrit par l'arête extérieure des pièces à travailler (6), et de préférence à l'intérieur de la cabine (3n), sont prévus des groupes ou des dispositifs de chauffage, de refroidissement ou d'aération (7).

6. Poste de travail selon l'une des revendications 1 à 4, caractérisé en ce qu'au moins une partie des groupes ou des dispositifs de chauffage, de refroidissement ou d'aération (7) est placée directement sur le rotor (3b) ou sur les réceptacles (3c) et est dirigée sur une ou plusieurs des pièces à travailler (6) maintenues.
